# EUROPEAN PATENT SPECIFICATION

(11) **EP 0 559 260 B1**
(45) Date of publication and mention of the grant of the patent: **20.12.1995**
(21) Application number: 93200403.9
(22) Date of filing: 13.02.1993
(51) Int. Cl.: A23N 1/00

(54) **Fruit juicer**
Obstpresse
Presse-agrume

(30) Priority: 20.02.1992 ES 9200366
(43) Date of publication of application: 08.09.1993
(73) Proprietor: COMERCIAL FRUCOSOL, S.L., E-21570 San Adrian (ES)
(72) Inventor: Deza San Baudilio, Fernando, E-26500 Calahorra (La Rioja) (ES); Deza San Baudilio, Florentino, E-26500 Calahorra (La Rioja) (ES); Etayo Jubera, Francisco, E-31570 San Adrian (Navarra) (ES); Jimenez Martinez, Jesus, E-26500 Calahorra (La Rioja) (ES)
(74) Representative: Gomez-Acebo y Pombo, José Miguel

(56) References cited:
- GB-A- 2 216 784
- US-A- 2 270 007
- US-A- 4 088 070

## Description

The present invention refers to a fruit juicer especially conceived to squeeze citrus fruit, obtaining a clear juice with the minimum contamination of the juices contained in the rind.

The machine of the invention is especially for use in establishments where the consumption of juice may be high, but the amount of juice to be consumed each time must be produced precisely at that moment.

Spanish utility model 263,636 already discloses a citrus fruit juicer, which comprises a containing hopper, a mechanism that supplies oranges to a plate-guide, an orange cutter cutting the orange into two halves, means to place the halves in the position to be squeezed and presses to squeeze the halves of the fruit and extract the juice. However, this type of machine has a complicated structure and operation, due to the large number of mechanisms and parts that it includes.

Spanish patent no. 8800970 discloses a fruit juicer with a simpler construction, which also includes a fruit storage element, a fruit supplying device, a cutter that divides the fruit into two identical halves, and means to press the halves of the fruit and extract juice. Although simple, this machine is still too voluminous, especially since it has to have outlets on both sides for the rind. Besides, the squeezing mechanisms have, due to their special shape, certain problems for cleaning, as there are angular areas where pulp deposits are formed and they are hard to clean. On the other hand, the fruit is cut by pressure, pushing the fruit against the cutting edge of the blade, a system which can cause partial crushing of the fruit and, with this, extraction of certain juices contained in the rind, that may turn out to be undesirable for the juice that is to be extracted.

The object of the present invention is a fruit juicer, especially to squeeze citrus fruit, with a simple construction, comprised of a reduced number of parts, in comparison with traditional machines. This quality results in a lower cost and better operation. Besides, due to the reduced number of parts that make up the squeezing mechanisms and their special design, the cleaning operations can be carried out with the maximum guarantees of safety and effectiveness, a circumstance which is also enhanced by the simple shapes of the parts that make up the squeezing mechanisms.

Another advantage of the juicer of the invention is that it makes it possible to obtain juices as pure as possible, without contamination of juices, acids, etc. contained in the rind.

The juicer of the invention comprises a frame that delimits in the top part a front chamber, wherein the mechanisms that handle and squeeze the fruit are housed, and a rear chamber that houses the operating mechanisms. In the bottom part the frame forms a chamber with means to collect the juice extracted and rind. A fruit containing element that can consist of a hopper or feeding duct reaches the front top chamber.

The mechanisms for handling the fruit and extracting the juice comprise a fruit carrier rotor with a horizontal shaft and axial blades; a vertical cutter facing the fruit carrier rotor, to which it is secant in its middle transversal plane, at the descending side of the rotation path of said rotor; and two secant squeezing cylinders with parallel horizontal shafts, complementary constant male and female sections, both rotating in opposite directions. Beneath the squeezing cylinders are the mechanisms for collecting the extracted juice and the rind.

The outer fruit feeding hopper or duct empties on to the carrier rotor which fastens between each two consecutive blades a cavity that is dimensioned to receive and house at least partially one piece of fruit. Upon the rotor turning, the cavities successively pass under the mouth of the feed hopper or duct, receiving a piece of fruit and peripherally carrying it during rotation thereof until it faces the cutter. The blades that delimit the cited cavities have, from the outer edge, a longitudinal groove through which the cutter penetrates to the core of the rotor. With this construction, upon the rotor continuing to turn, the fruit faces the constant edge of the cutter, resting against the same, the fruit being pressed and at the same time slid downward with regard to the cutter, causing the progressive cutting of the fruit, up to all of it, due to the penetration of the cutter into the rotor.

The male and female squeezing cylinders have complementary sections that are consecutively interlinkable between each other during the rotation of said cylinders. The male squeezing cylinder has a multilobular section, with anglewise equidistant projecting lobes with an arched contour. For its part, the female squeezing cylinder has identical longitudinal channels, anglewise equidistant and with a curved section approximately equal or slightly larger than that of the lobes of the male squeezing cylinder.

The female squeezing cylinder remains located below the carrier rotor, in such a way that it receives in each one of the longitudinal channels the two halves of each piece of fruit cut. The female rotor turns in such a way that it peripherally carries the two halves of the fruit upon coming up against the male cylinder, which will cause, in the coupling stage of the corresponding shapings of both cylinders, the pressing and total squeezing of said halves.

The surfaces of the interlinkable shapings of the squeezing cylinders remain slightly separated from each other, in the positions of maximum coupling, an amount approximately equivalent to the thickness of the rind of the fruit, whereby there is no pressing and squeezing of this rind.

The blade will preferably have a curved-concave cutting edge, inclined downwards towards the carrier rotor. The cutting edge will form at the bottom an extension which is that which penetrates into the rotor, to the core of the same, through the grooves of the blades.

The collecting means of the juice and rind consist of superimposed top tray and a bottom drawer, both removable through the front of the juicer, which are located under the squeezing cylinders, the bottom drawer extending in the rear beyond the top tray.

Above the tray there is a rind retaining grating. The tray has an inclined bottom which leads towards an outlet hole and has a filtering cover mounted on it. The above mentioned grating slides backward, above the tray, inclined downward and slightly extends beyond said tray to lead the rind behind the same towards the bottom drawer.

The construction, characteristics and advantages of the juicer of the invention can be more easily understood by means of the following description, made with reference to the attached drawings, wherein a possible embodiment, which is a non-restrictive example, is shown.

In the drawings:
Figure 1 is a perspective view of a juicer formed in accordance with the invention.
Figure 2 is a side view, according to direction A-A of figure 1, wherein the covers that close the top front and rear chambers have been eliminated.
Figure 3 is a front raise view of the juicer of figure 1, without the cover of the squeezing mechanisms chamber.
Figure 4 is a side raised view of the juicer, according to direction B of figure 1, wherein the cover of the top chambers has been eliminated.
Figure 5 is a schematic front raised view of the transmission system of the operation mechanism.
Figure 6 is a perspective piece view of the carrier rotor and of the cutter.
Figures 7 and 8 are perspective views of the female and male squeezing cylinders, respectively.

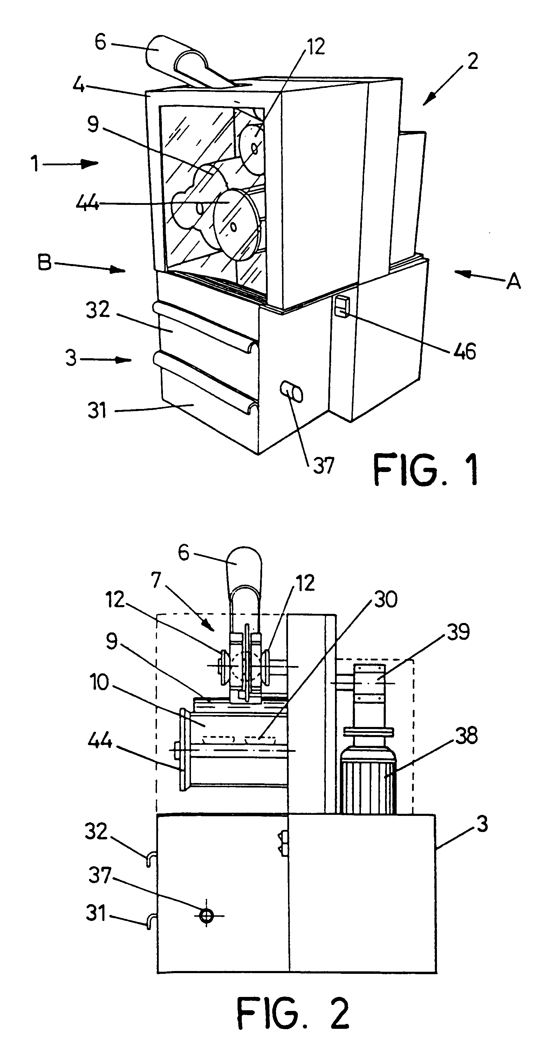

The juicer shown in figure 1 includes a frame with a general prismatic shape, which delimits above two chambers, a front one, reference number 1, wherein the mechanisms that handle and squeeze the fruit are housed, and another rear one indicated with reference number 2, wherein the operation mechanisms are housed. Under these chambers a bottom compartment or chamber (3) where the means for collecting the juice and rind are located is formed.

One can have access to the top chamber (1) by taking off the cover (4), which can be fastened, for example, by screws or any other system.

Cover (4) is passed through by a fruit feeding duct or hopper, having reference number 6.

As can be seen better in figures 2, 3 and 4, a fruit carrier rotor with a horizontal shaft, of reference number 7, a vertical cutter 8, facing the carrier rotor secant to the same in its middle transversal plane, and two secant squeezing cylinders with parallel shaft and a constant section, one of which of a male section, of reference number 9 and the other with a female section, of reference number 10, are housed in the top front chamber (1.)

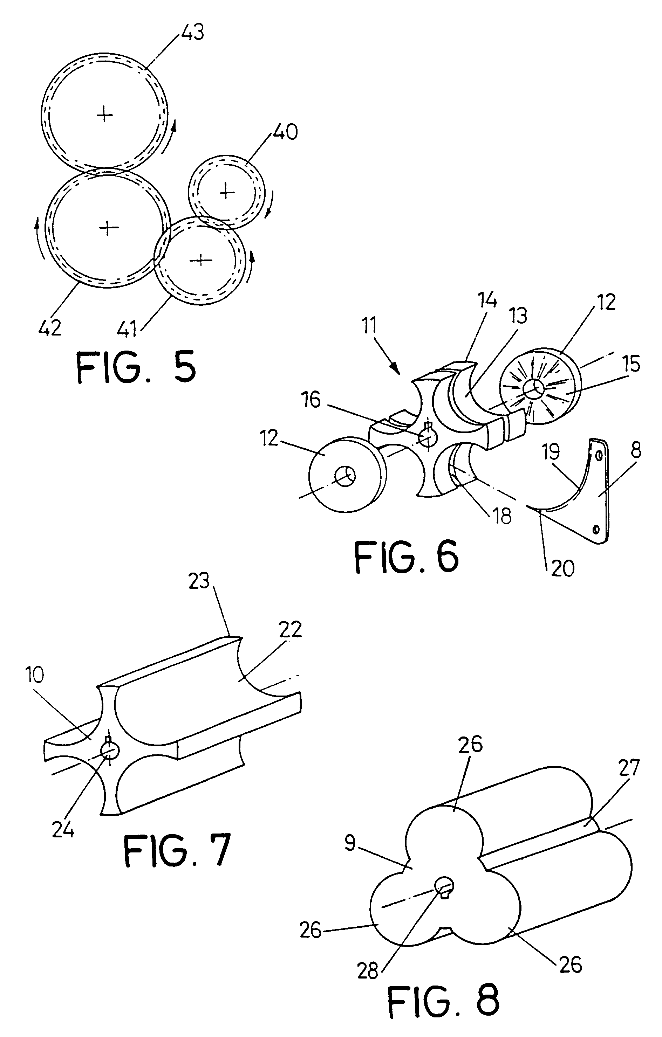

The structure of these components will be explained upon referring to figures 6 to 8.

The rotor (7), figure 6, is comprised of a center body (11) and two end closing covers (12.) The body (11) has a cylindric contour and has, all along it, identical recesses (13), with a curved-concave section, anglewise equidistant, that are separated by partition walls or axial middle blades (14) that widen slightly towards the free edge thereof. The covers (12) are truncated-cone shaped, with the conical surface (15) directed towards the center body (11.) This center body has an axial drilled hole (16) with a cotter hole for assembly thereof in the corresponding shaft (17.)

As can also be seen in figure 6, the center body (11) has, from the free edge of the blades (14), a peripheral center groove (18) that partially penetrates into the core of the body (11.) The cutter (8), that has an arched cutting edge, inclined downward towards the rotor (11) and finished at the bottom with an extension (20) which is that which partially penetrates into the core of the body (11) of the rotor , will penetrate through this groove.

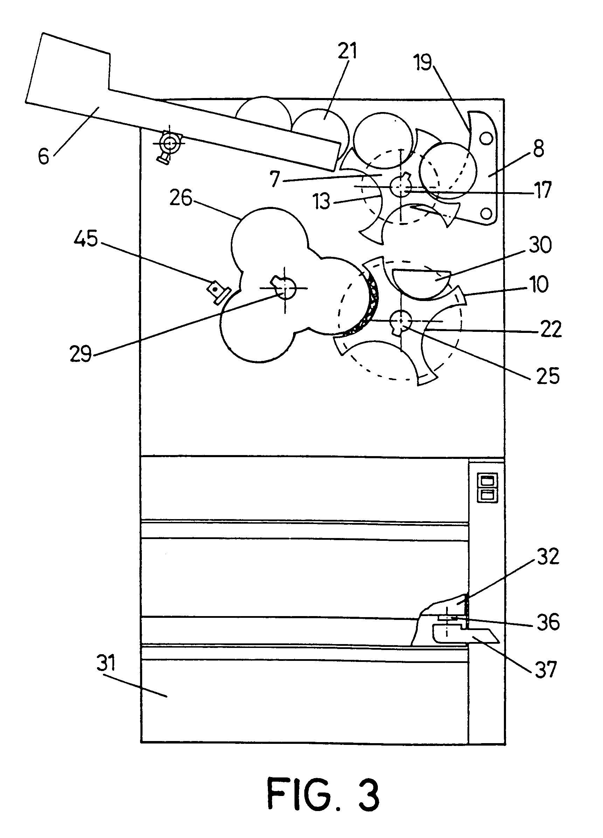

With the cited structure , the channels (13) of the rotor, closed by means of end covers (12), delimit dimensioned housing to receive fruit (21), figure 3, that is supplied through the hopper or duct (6.)

The female cylinder (10), represented in figure 7, has four identical longitudinal channels (22), with a section whose shape is approximately that of a circular arch, that remain separated by partition walls (23.) This cylinder (10) has an axial through hole (24) with a cotter hole for assembly thereof in the shaft (25), figure 3.

The male squeezing cylinder (9), represented in figure 8, has a multilobular section and has, in the example described, three projecting lobes (26), which are identical and sideways equidistant. Each one of these lobes has a circular arched shape contour, with an angular width preferably larger than 180^{º}, every two consecutive lobes remaining separated by narrow sections (27.) The male squeezing cylinder (9) also has a center longitudinal drilled hole, with a cotter hole, for assembly thereof in the corresponding shaft with reference number 29 in figure 3.

The rotor, as can be seen in figure 3, is located so that the fruit (21) supplied by the hopper or duct (6) successively occupies, while said rotor rotates, the cavities or recesses (13) thereof. The rotor (7) turns clockwise, so that the fruit (21) is carried peripherally towards the cutter (8), against whose cutting edge (19) the fruit rests and moves downward, until the diameteral cutting thereof is achieved.

The female squeezing cylinder (10) is located below the rotor (7), in such a way that the halves (30) of pieces of fruit produced by the cutting of the fruit fall into the channels (22) of said cylinder. The female cylinder (10) and the male cylinder (9) turn in the opposite direction, the first one doing so counterclockwise, so that the halves (30) of the pieces of fruit are carried peripherally towards the lobes (26) of the male squeezing cylinder.

The rotation of the cylinders (9) and (10) is synchronized in such a way that in each channel (22) of the female squeezing cylinder a lobe (26) penetrates in order to cause the crushing of the two halves (30) of the piece of fruit, squeezing them totally, without squeezing the rind hardly at all, for which purpose the surfaces of the lobes (26) and channels (22) are consecutively coupled remaining slightly separated from each other, an equivalent amount, approximately that of the width of said rind.

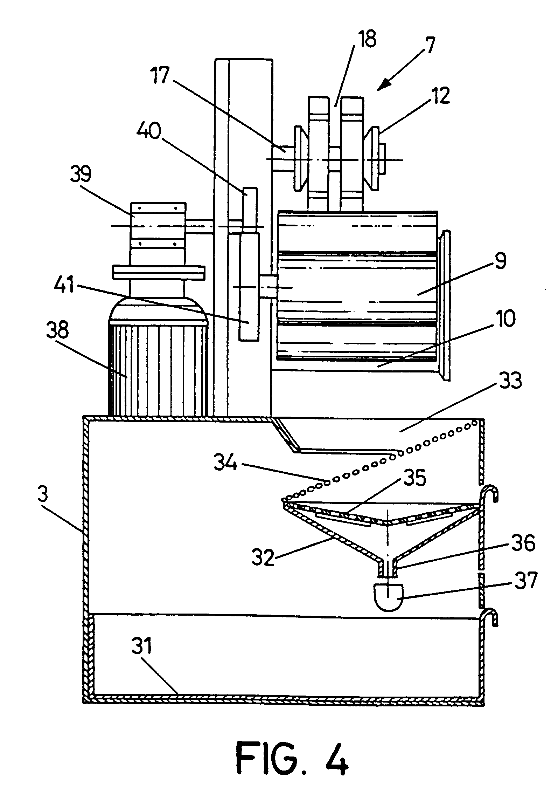

As can be better seen in figure 4, a bottom drawer (31), a rind collector and a fruit collecting tray (32) are placed in the bottom chamber or compartment (3.) The chamber (3) has at the top, under the squeezing rollers (9) and (10), an opening (33), with inclined planes that lead towards a grating (34) that runs above the tray (32), inclined downward and backward. This grating (34) will preferably consist of horizontal transversal rods, for example that rotate freely.

The juice that is extracted passes through the grating (34), as well as a filter cover (35) located over the tray (32), reaching the bottom of the same, that is inclined towards an outlet hole (36), under which the duct (37) that extends outside originates, figure 1, to obtain the extracted juice.

The rind will also fall on the grating (34) over which it will slide until it falls into the collecting drawer (31.)

The tray (32) as well as the drawer (31) can be removed from the front, so that they may be cleaned and the filtering cover (35) may be separated from the tray (32), just like the top grating (34.)

In this same way, the squeezing mechanisms may be cleaned easily by simply removing the cover (4.)

An operating motor (38), figures 2 and 3, is located in the rear chamber, as well as a reducing mechanism (39) and a series of toothed operating wheels that are represented in figure 5 and that include a first pinion or wheel (40), which is linked to the reducing mechanism (39) and that fits into a toothed wheel (41), which is linked to the shaft of the male squeezing cylinder (9.) The toothed wheel (41) in turn fits into a toothed wheel (42) that is linked to the shaft (25) on which the squeezing roller (10) is mounted. Finally, this wheel fits into the toothed wheel (43), linked to the shaft (17) on which the rotor (7) is mounted.

In the example represented in the drawings, the rotor (7) and the female squeezing cylinder (10) turn at the same speed, as they have the same number of longitudinal recesses. On the contrary, the rotation speed of the squeezing roller (9) will be somewhat faster than that of the female squeezing roller (10), upon having a smaller number of lobes (26) than channels (22.)

As can be seen in figure 1, the female squeezing cylinder is closed at the front by means of a disk (44.) The juicer has starting and stopping switches or controls (46) in the bottom body (4.)

As can be seen in figure 3, the juicer may have an oscillating cleaning blade, which has a handle that projects from the frame of the juicer for operation thereof. This blade runs parallel to the male squeezing cylinder (9) and in its inoperative position it is slightly separated from the same. Through the projecting handle, the blade can be moved until it rests longitudinally on the surface of the cylinder (9), separating the portions of rind or pulp that can remain adhered to the same, thus this blade serves as a cleaning device.

As can be understood, the frame can have a structure different from the one described. This is also true for the cover (4) of the same.

## Claims

1. Fruit juicer, provided with an outer feeding duct or hopper (6), comprising a fruit carrier rotor (7), with a horizontal shaft and axial blades; a vertical cutter (8), opposite and secant to the fruit carrier rotor in the middle transversal plane thereof, at the descending side of the path of rotation of said rotor; two secant squeezing cylinders (9, 10) with parallel horizontal shafts, with constant complementary male (9) and female (10) sections, both rotating in opposite directions; and means to collect the extracted juice and the rind, located under the squeezing cylinders; whose rotor (7) is located under the mouth of the feeding duct or hopper (6) and it determines, between every two consecutive blades, a recess (13) dimensioned to partially house a piece of fruit, carrying it peripherally during rotation thereof until it faces the cutter (8), said blades having, from the end edge, a longitudinal groove (18) through which the blade passes to the core of the rotor; and whose male and female squeezing cylinders have complementary sections that are consecutively interlinkable together during rotation of said cylinders, the female cylinder being located under the carrier rotor, in order to receive the cut fruit and peripherally transport it towards the male cylinder in order to squeeze the same.

2. Juicer, according to claim 1, characterised in that the male squeezer cylinder has a multilobular section, with anglewise equidistant projecting lobes (26) with an arched contour.

3. Juicer, according to claim 2, characterised in that the male squeezing cylinder includes three circular arch-shaped lobes with an angular width preferably greater than 180^{º}, separated by middle narrow sections.

4. Juicer, according to claim 1, characterised in that the female squeezing cylinder has identical longitudinal anglewise equidistant channels (22), with a curved section approximately identical to that of the lobes of the male squeezing cylinder.

5. Juicer, according to claim 4, characterised in that the female squeezing cylinder has on its surface four longitudinal channels, with a section having approximately a circular arch shape, that remain separated by longitudinal radial partition walls (23) that widen slightly towards the longitudinal edge thereof.

6. Juicer, according to the above claims, characterised in that the shafts of the squeezing cylinders are separated from each other slightly larger than the sum of the radii of said cylinders, in such a way that during the rotation thereof the lobes of the male cylinder successively penetrate into the the opposite channels of the female cylinder, their surfaces remaining separated a distance approximately equivalent to the thickness of the rind.

7. Juicer, according to claim 1, characterised in that the cutter has a curved-concave cutting edge inclined downward towards the carrier rotor, whose edge forms at the bottom part an extension (20) that penetrates into said rotor, up to the core of the same, through the grooves of the blades.

8. Juicer, according to claim 1, characterised in that the carrier rotor consists of a center body (11) and two end closing covers (12); whose body has a cylindric contour and has all along it identical recesses with a curved-concave section, anglewise equidistant and dimensioned to house, at least partially, a piece of fruit in each recess; and whose covers have a truncated cone shape and are abutted against the end section of the center body, closing sideways the recesses, with the conical surface (15) facing said body.

9. Juicer, according to claim 1, characterised in that the means for collecting the juice and the rind consist of a top tray (32) and a bottom drawer (31), both removable, and a rind retaining grating (34) placed above the tray; whose tray remains located under the squeezing cylinders, having an inclined bottom that leads towards an outlet hole (36) and has a filtering cover (35) mounted thereon; and whose bottom drawer extends backwards beyond the tray in a section where the rind is collected; and whose grating runs backward above the tray, inclined downward, and slightly extending beyond said tray to lead the rind to the bottom drawer.

## Patentansprüche

1. Fruchtpresse, mit einer aussere Zuführungsleitung oder Zuführungseinrichtung (6) ausgestattet die sich aus einem Fruchtfördernrotor (7) besteht, mit einer waagerechte Welle und axialen Messer; einem senkrechten, zum Fruchtfördernrotor entgegengesetzen und entschneidenden Abschneider (8) in der mittlere, quer Ebene von diesem, an der sinkende Drehbahn dieses Rotor; zwei entschneidende Pressenzylindern (9, 10) mit parallel waagerechten Wellen, mit ständig ergänzenden männlichen (9) - und weiblichen (10) Abschnitte, beide in entgegende Richtung rotiernd; und mit Mitteln zur Aufnahme des gewonnen Saft und der Schale, die sich unter der Pressenzylindern befinden; dessen Rotor (7) unter der Mündung der Zuführungsleitung oder Zuführungseinrichtung (6) angeordnet wird und dies eine Ausnehmung (13) zwischen zwei anliegenden Messer bildet, die für die teilweise Aufnahme eines Fruchtstückes bemessen ist, wobei dieses während seine Rotation an seinem Umfang gehalten wird bis es den Abschneider (8) trifft, wobei diese Messer, ab Randende, eine längliche Rille (18) aufweisen, durch die das Messer zur Rotorkern durchgeht; und dessen männlichen und weiblichen Pressenzylinder ergänzenden Abschnitte ausweisen, die während der Rotation dieser Zylindern in aufeinenderfolgende Weise untereinender verbindbar sind, wobei der weiblicher Zylinder unter des zuführenden Rotor angeordnet wird um die zerschnittene Früchte aufzunehmen, und sie peripherischerweise zum männlichen Zylinder zu fördern, damit sie gepresst wird.

2. Fruchtpresse nach Anspruch 1, dadurch gekennzeichnet, daß der männliche Presszylinder eine multilappige Abschnitt aufweist, mit Lappen (26) die sich winkelförmig in gleichen Abstand projektieren mit bogenförmige Kontur.

3. Fruchtpresse nach Anspruch 2, dadurch gekennzeichnet, daß der männliche Pressenzylinder drei bogenförmigen Lappen mit einer winkliche Breite vorzugweise grösser als 180° aufweist, durch mittlere engen Abschnitte getrennt.

4. Fruchtpresse nach Anspruch 1, dadurch gekennzeichnet, daß der weibliche Pressenzylinder Rille (22) in Winkel und Länge idäntisch und in gleichen Abstand aufweist, mit einer bogenförmige Querschnitte ungefähr gleich wie diese der Lappen des männlichen Pressenzylinder.

5. Fruchtpresse nach Anspruch 1, dadurch gekennzeichnet, daß der weibliche Pressenzylinder vier längs Rille auf ihre Oberfläche aufweist, mit einer Querschnitt die etwa kreisbogenförmig ist, die durch radial, längs Trennwände (23) getrennt steht, die sich leicht zu ihrem längs Rand erweitern.

6. Fruchtpresse nach vorstehenden Ansprüche, dadurch gekennzeichnet, daß die Wellen der Pressenzylindern sich voneinander geringfügig auf mehr als der Summe ihren Radius getrennt sind, so daß während der Rotation der Zylindern, die Lappen des männlichen Zylinder an der entgegengesetzen Rillen des weiblichen Zylindern laufend eindringen, wobei ihre Flächen zu einem Abstand der etwa der Schalendicke entspricht stehen.

7. Fruchtpresse nach Anspruch 1, dadurch gekennzeichnet, daß der Abschneider einen konkav, bogenförmig, zum Fördernrotor nach unten geneigten Schnittrand aufweist, dessen Rand an den unteren Seite, eine in den gennanten Rotor durch die Rillen der Messernbis bis zum Kern dieses eidringende Verlängerung (20) bildet.

8. Fruchtpresse nach Anspruch 1, dadurch gekennzeichnet, daß der Fördernrotor aus einem Mittenkörper (11) und zwei Schlußdeckel (12) besteht, dessen Körper einen zylindrischen Umriß aufweist und auf seiner ganzen Länge gleiche Ausnehmungen mit konkav, bogenförmige Querschnitt hat, die in gleichen winkelförmigen Abstand gelegt und bemessen sind, um einen Obststück, wenigstens teilweise, auf jeder Ausnehmung aufzunehmen; und deren Abdeckungen einen stumpfelkegel Form aufweisen und in Kontakt mit dem Endabschnitt des Mittenkörper stehen, Schlußablenkungen der Ausnehmungen mit der stumpfen Fläche (15) die dieser Körper aufweist.

9. Fruchtpresse nach Anspruch 1, dadurch gekennzeichnet, daß die Mitteln um Saft und Schalen aufzunehmen aus einer oberen Auffangsschale (32) und einen unteren Auszieher (31), beide ausziehbar, und einer über der Auffangsschale engelegte Masche (34) für das Zurückhalten der Schalen besteht; deren Auffangsschale sich unter der Pressenzylindern befindet, wobei sie einen geneigten Boden mit einer zum Ausslaß füherende Öffnung (36) und einen filtrierenden Deckel (35) auf dieser angeordenet hat; und deren Bodenauszieher von hinten, weiter weg von der Auffangsschale, sich in einem Abschnitt verbreitet an dem die Schalen eingesammelt werden; und deren Masche sich von hinten über der Auffangsschale, nach diese geneigt, erstreckt, und wobei dieser, sich geringfügig weiter weg dieser Auffangsschale verlängert, um die Schalen zum Bodenauszieher zu führen.

## Revendications

1. Presse-fruits, composé d'un conduit d'alimentation externe ou dispositif d'alimentation (6) composé d'un rotor qui transporte les fruits (7), avec un axe horizontal et des lames axiales; une trancheuse verticale (8), opposée et sécante au rotor transporteur des fruits sur le plan transversal, sur la face descendante du chemin de rotation du rotor; deux cylindres presseurs (9, 10) sécants avec des axes horizontaux paralléles, munis de deux sections mâle (9) et femelle (10), complémentaires constantes, tous deux tournants dans des sens opposés, et des moyens pour récupérer le jus extrait et les épluchures situés sous les cylindres presseurs. Le rotor (7) se trouve situé sous l'ouverture du conduit d'alimentation ou dispositif d'alimentation (6) et cela détermine, entre deux lames consécutives, une cavité (13) dont les dimensions permettent loger partiellement un morceau de fruit, en le maintenant de façon périphérique pendant sa rotation jusqu'à ce que celui-ci rencontre la trancheuse (8). Les lames ont tout au long du bord, une rainure longitudinale (18) à travers laquelle passe la lame vers le centre du rotor et dont les cylindres presseurs mâle et femelle ont des sections complémentaires qui s'accouplent entre elles de façon consécutive pendant la rotation des cylindres, étant le cylindre femelle situé sous le rotor transporteur afin de ramasser les fruits coupés et les transporter prériphériquement jusqu'au cylindre mâle pour les préssés.

2. Presse-fruits, selon la revendication 1, qui se caractérise en ce que le cylindre presseur mâle posséde une section multi-lobuleuse, avec des lobules (26) qui se projectent de façon équidistante angulairement avec un contour arqué.

3. Presse-fruits, selon la revendication 2, qui se caractérise en ce que le cylindre presseur mâle posséde trois lobules en forme d'arc circulaire avec une largueur angulaire de préférence au-dessus de 180^{º}, séparés par des sections étroites au milieu.

4. Presse-fruits, selon la revendication 1, qui se caractérise en ce que le cylindre presseus femelle posséde des canaux équidistants (2) angulaire et longitudinalement identiques, avec une section courbée à peu près identique à celle des lobules du cylindre presseur mâle.

5. Presse-fruits, selon la revendication 4, qui se caractérise en ce que le cylindre presseur femelle présente sur sa superficie quatre canaux longitudinaux, avec une section qui a une forme approximative arqué circulaire, et qui reste séparée par des parois de partition (23) radiales longitudinales qui s'élargissent légérement vers son bord longitudinal.

6. Presse-fruits, selon les précédentes revendications, qui se caractérise en ce que les axes des cylindres presseurs sont légérement séparés entre eux bien plus que l'est la somme des rayons des cykindres, de façon que pendant la rotation des cylindres, les lobules du cylindre mâle pénétrent succésivement dans les canaux contraires au cylindre femelle, restant les superficies séparées à une distance approximativement équivalente a l'épaisseur de l'épluchure.

7. Presse-fruits, selon le revendication 1, qui se caractérise en ce que la trancheuse posséde un bord de coupe courbé concave incliné vers le bas, vers le rotor transporteur, dont le bord posséde sur sa partie inférieure un prolongement (20) qui pénétre dans le rotor jusqu'au centre ou noyau de celui-ci, à travers les rainures des lames.

8. Presse-fruits, selon la revendication 1, qui se caractérise en ce que le rotor transporteur posséde un corps central (11) et deux couvercles de fermeture (12), dont le corps présente un contour cylindrique et à sur tout sa longueur des cavités identiques de section courbée concave, équidistantes angulairement et dont les dimensions permettent loger, du moins partiellement, un morceau de fruit dans chaque cavité et dont les couvercles ont une forme de cône tronqué et sont en contact avec la section finale du corps central, déviations de fermeture des cavités avec la supeficie conique (15) que présent le dit corps.

9. Presse-fruits, selon la revendication 1, qui se caractérise en ce que les moyens pour récupérer le jus et les épluchures ont un plateau supérieur (32) et un extracteur inférieur (31), tous deux extractibles et un maille ou filet de retention pour les épluchures (34) située au-dessus du plateau , qui celui-ci se trouve situé sous les cylindres presseurs, en ayant un fond incliné qui conduit vers un orifice de sortie (36) et a un couvercle filtrant (35) disposé sur celui-ci. L'extracteur du fond se prolonge depuis l'arrière au-delà du plateau sur une section où l'on ramasse les épluchures et dont le filet se prolonge depuis l'arrière au-dessus du plateau inclinée vers et se prolongeant légérement au-delà du plateau pour conduire les épluchures vers l'extracteur du fond.
